Europäisches Patentamt

European Patent Office

Office européen des brevets

(19)

(11) Veröffentlichungsnummer: **0 012 448**
**B1**

(12) # EUROPÄISCHE PATENTSCHRIFT

(45) Veröffentlichungstag der Patentschrift:
**16.06.82**

(21) Anmeldenummer: **79105201.2**

(22) Anmeldetag: **17.12.79**

(51) Int. Cl.³: **B 01 D 59/12**, C 01 B 3/50

(54) Verfahren und Vorrichtung zur selektiven Abtrennung von Wasserstoff aus einer Gasmischung durch Diffusion.

(30) Priorität: **18.12.78 DE 2854638**

(43) Veröffentlichungstag der Anmeldung:
**25.06.80 Patentblatt 80/13**

(45) Bekanntmachung des Hinweises auf die Patenterteilung:
**16.06.82 Patentblatt 82/24**

(84) Benannte Vertragsstaaten:
**BE CH FR GB IT**

(56) Entgegenhaltungen:
**DE-A-2 536 798**
**FR-A-1 317 331**
**US-A-2 536 610**
**US-A-3 407 571**

(73) Patentinhaber: **Kernforschungsanlage Jülich
Gesellschaft mit beschränkter Haftung, Postfach 1913,
D-5170 Jülich (DE)**

(72) Erfinder: **Ali-Khan, Imram, Dr., Artilleriestrasse 41,
D-5170 Jülich (DE)**
Erfinder: **Dietz, Karl-Jürgen, Dr., Mary Tavy, Orchard
Close East Hendred, Oxon 12 8IJ (GB)**
Erfinder: **Waelbroeck, Francoise Prof. Dr,, Mannheimer
Strasse 4, D-5170 Jülich (DE)**
Erfinder: **Wienhold, Peter, Dr., Kopernikusstrasse 10,
D-5170 Jülich (DE)**

ACTORUM AG

# Verfahren und Vorrichtung zur selektiven Abtrennung von Wasserstoff aus einer Gasmischung durch Diffusion

Die Erfindung bezieht sich auf ein Verfahren und eine Vorrichtung zur selektiven Abtrennung von Wasserstoff aus einer Gasmischung durch Diffusion, aus einer allseitig verschliessbaren Kammer, durch eine für atomaren Wasserstoff durchlässige, für molekularen Wasserstoff weniger durchlässige Wand aus einem von Palladium verschiedenen Material, in eine zweite allseitig verschliessbare Kammer.

Ultrareiner Wasserstoff wird in der Technik für zahlreiche Verfahren benötigt.

Es ist bekannt, dass Wasserstoff aus Gasgemischen durch Diffusion durch eine Metallmembran aus Palladium oder Palladiumlegierung abgetrennt werden kann.

Aus der US-A 3 407 571 ist auch bereits ein Verfahren bekannt, nach dem als Trennwand für eine solche Diffusion ein von Palladium verschiedenes Metall wie zum Beispiel gewöhnlicher Stahl verwendet wird, das für atomaren Wasserstoff durchlässig und für molekularen Wasserstoff im wesentlichen undurchlässig ist, allerdings wird eine solche von Palladium verschiedene Trennwand auf der Seite der Gasmischung beziehungsweise Wasserstoffzutrittsseite mit einem Oberflächenbelag aus Palladium versehen. Durch dieses Verfahren wird die notwendige Palladiummmenge merklich vermindert, bei gleichzeitiger Verbeserung der mechanischen Eigenschaften der Anordnung.

Vorzugsweise wird bei diesem Verfahren ein Überdruck auf der Wasserstoffzutrittsseite von zumindest 0,7 bar und vorzugsweise 1,4 bis 100 bar vorgesehen.

Es wurde nun gefunden, dass die Abtrennung von Wasserstoff aus Gasmischungen, die Wasserstoff in molekularer oder gebundener Form enthalten, wesentlich verbessert werden kann, wenn statt des Palladiumbelages auf der Oberfläche der Wandung eine von der Wand gesonderte Einrichtung zur Erzeugung von atomarem Wasserstoff wie zum Beispiel mittels eines Glühdrahtes oder einer Glimmentladung vorgesehen wird.

Das erfindungsgemässe Verfahren der eingangs genannten Art ist daher dadurch gekennzeichnet, dass man den in molekularer oder gebundener Form vorliegenden Wasserstoff vor der Diffusion mittels einer von der Wand gesonderten Vorrichtung in atomaren Wasserstoff umwandelt.

Nach diesem Verfahren wird nicht nur die Anwendung von Palladium völlig überflüssig, sondern der Wasserstoffdurchtritt durch die Trennwand intensiviert und vom Druck auf der Zutrittsseite weitgehend unabhängig, so dass eine Wasserstoffabtrennung selbst bei Partialdrucken von beispielsweise $10^{-5}$ bar noch ermöglicht wird und sogar ein Pumpeffekt, d.h. eine Erhöhung des Wasserstoffdrucks auf der Abtrennungsseite über den auf der Zutrittsseite ohne Einsatz mechanischer Mittel erreicht wird.

Um eine solche Pumpwirkung auszunutzen, werden lediglich die erfindungsgemässen Massnahmen zur Abtrennung des Wasserstoffs so lange durchgeführt, bis ein entsprechend erhöhter Druck im Raum hinter der Trennwand erreicht ist.

Bei Anwendung dieser Massnahmen ist es ohne weiteres möglich, in dem abgetrennten gasförmigen Wasserstoff Drücke bis zu 20 bar zu erreichen, selbst wenn der Partialdruck zum Beispiel nur $10^{-3}$ mbar beträgt.

Eine Vorrichtung zur Durchführung des Verfahrens gemäss der Erfindung geht aus den Patentansprüchen hervor und umfasst im wesentlichen zwei Kammern mit einer Trennwand, die für atomaren Wasserstoff durchlässig, für molekularen Wasserstoff praktisch undurchlässig ist und mit einer von der Wand gesonderten Einrichtung zur Umwandlung von molekularem oder gebundenem Wasserstoff in atomaren Wasserstoff in der einen Kammer, die mit einer Gaszuleitung versehen ist.

Eine zur kontinuierlichen Abtrennung von Wasserstoff aus einer Gasmischung zweckmässige Ausgestaltung der Vorrichtung umfasst eine mit Ventil versehene Ableitung für das nach Abtrennen des Wasserstoffs verbleibende Restgas, die mit der einen zutrittsseitigen Kammer verbunden ist. Dadurch wird es ermöglicht, das Gasgemisch, aus dem das Wasserstoffisotopengemisch abgetrennt werden soll, laufend der mit der Gaszuführung verbundenen Kammer zuzuführen und das Restgas nach der Abtrennung abzuziehen.

Zur Umwandlung von molekularem und/oder gebundenem Wasserstoff in atomaren Wasserstoff können bekannte Einrichtungen zur Kontaktdissoziation, zur Erzeugung von Glimmentladungen, Hochfrequenzentladungen oder ionisierender Strahlung oder auch eine Lichtbögen erzeugende Einrichtung vorgesehen sein. Als sehr vorteilhaft hat sich ein auf eine oberhalb 1500 K liegende Temperatur aufheizbarer Faden, Draht oder Körper sonstiger Form aus hochschmelzendem Material wie Wolfram, Iridium, Osmium, Rhenium erwiesen.

Zur Erhöhung des Durchsatzes durch die für atomaren Wasserstoff permeable Wandung ist es vorteilhaft, dass die permeable Wandung auf eine oberhalb Zimmertemperatur liegende Temperatur aufheizbar ist, und zwar vorzugsweise auf eine Temperatur von 400 bis etwa 800 K, da bei diesen Temperaturen die Permeationsflussdichte besonders günstig ist. Dabei hängt die Höhe der Temperatur, bis zu der die permeable Wandung aufgeheizt wird, davon ab, welcher Druck in dem in der Auffangkammer befindlichen Gas erreicht werden soll. Wie sich gezeigt hat, wird durch Erhöhen der Temperatur zwar die Permeationsflussdichte erhöht, doch nimmt zugleich die Höhe des erreichbaren Druckes ab. Permeationsflussdichte und der in dem in der Auffangkammer angesammelten Gas erzielbare Druck hängen ausserdem von der Wahl des Materials für die permeable Wandung ab. Als vorteilhaft hat sich die Verwendung von Eisen, wie zum Beispiel α-Eisen, Stahl, wie zum Beispiel ein Stahl der Zusammensetzung von ST 60 oder ein austenitischer Stahl, oder auch Nickel sowie Nickelbasislegierungen erwiesen.

Eine sehr vorteilhafte Ausgestaltung der Vorrichtung gemäss der Erfindung, die eine sehr gleichmässige Beaufschlagung der für atomaren Wasserstoff permeablen Wandung ermöglicht, besteht darin, dass die Kammern koaxial zueinander angeordnet sind, wobei der schwer schmelzbare Faden, Draht oder Körper mit einer sonstigen Form in der gemeinsamen Achse der Kammer vorgesehen und die permeable Wandung als den Körper aus hochschmelzendem Material mit Abstand umgebender Hohlzylinder ausgebildet ist.

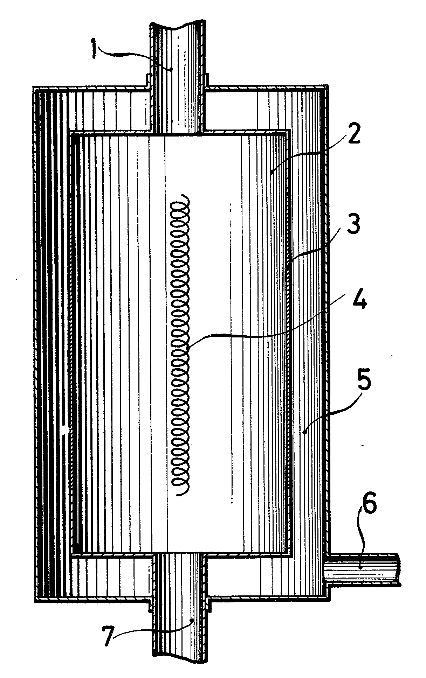

Ein Ausführungsbeispiel der Vorrichtung gemäss der Erfindung ist in der Zeichnung schematisch dargestellt und wird im folgenden näher beschrieben.

Das Wasserstoff enthaltende Gasgemisch wird über die mittels eines in der Zeichnung nicht dargestellten Ventils verschliessbare Zuführungsleitung 1 in eine Kammer 2 eingeleitet. Die Kammer 2 ist zylindrisch ausgebildet, wobei ein Teil der Zylinderwandung 3 für Wasserstoffatome permeabel ist. In der Achse der zylindrischen Kammer 2 ist ein Faden oder Draht 4 aus einem hochschmelzenden Stoff, wie zum Beispiel Wolfram, angeordnet, dessen Länge der Länge des für atomaren Wasserstoff permeablen Teils der Wandung des Zylinders entspricht und der mittels einer in der Zeichnung nicht dargestellten Heizvorrichtung auf eine Temperatur bis zu etwa 2000 K aufheizbar ist.

Die zylindrische Kammer 2 ist koaxial von einer Kammer 5 umgeben, die zum Auffangen des in dem Gasgemisch der Kammer 2 in molekularer und/oder gebundener Form enthaltenen, sodann mittels des Wolframfadens oder -drahts in atomaren Wasserstoff umgewandelten und nach dessen Durchtritt durch den für atomaren Wasserstoff permeablen Teil 3 der Wandung der zylindrischen Kammer 2 in die molekulare Form übergehenden Wasserstoffs bestimmt ist.

Wie der Zeichnung zu entnehmen ist, passiert das durch die Zuleitung 1 in die zylindrische Kammer 2 eingeleitete Gasgemisch den Faden oder Draht 4 aus Wolfram. Der in dem eingeleiteten Gasgemisch enthaltene molekulare und/oder gebundene Wasserstoff wird dabei in atomaren Wasserstoff umgewandelt und gelangt nach dem Durchdringen der permeablen Wandung in die Kammer 5. Er verbleibt nach Rekombination je zweier Wasserstoffatome in Wasserstoffmoleküle in der Kammer 5, die an eine in der Zeichnung nicht dargestellten Einrichtung zum Evakuieren anschliessbar ist, so lange, bis er nach Erreichen eines vorbestimmten Drucks über eine Ableitung 6 aus der Kammer 5 abgezogen wird. Das nach dem Passieren des Fadens oder Drahtes 4 aus Wolfram verbleibende Restgas wird über die mit der Kammer 2 verbundene, mittels eines in der Zeichnung nicht dargestellten Ventils verschliessbare Ableitung 7 aus der Kammer abgezogen, so dass die Vorrichtung gemäss der Erfindung durch stetige Zu- und Ableitung des Gasgemisches, von dem der Wasserstoff abgetrennt werden soll, kontinuierlich betrieben werden kann. Zugleich kann infolgedessen der Druck in der Kammer 5 bis auf eine für zahlreiche Anwendungsfälle hinreichende Höhe erhöht werden.

1. Ausführungsbeispiel

In die zuvor evakuierte Kammer 1 einer Vorrichtung gemäss der Erfindung wurde ein Wasserdampf-Wasserstoffgemisch, bestehend aus 1% Wasserdampf und 99% Wasserstoff, eingeleitet, wobei das Gasgemisch unter einem Druck von $4,6 \times 10^{-4}$ mbar stand. Der zur Erzeugung von atomarem Wasserstoff verwendete Wolframfaden hatte eine Gesamtoberfläche von 0,3 cm² und wurde mit einer Leistung von 13 W auf eine Temperatur von 2000 K aufgeheizt. Als Material für die für atomaren Wasserstoff permeable Wandung wurde α-Eisen verwendet. Die permeable Wandung hatte eine Dicke von etwa 1 mm, ihre Gesamtfläche betrug 100 cm². Ihre Temperatur lag bei etwa 470 K. Es ergab sich durch die permeable Wandung hindurch in die zuvor evakuierte Auffangkammer 5 ein Saugvermögen von 0,3 l/sec für Wasserstoff. Der Druck des in der Auffangkammer angesammelten Wasserstoffs betrug bei einem Kammervolumen von 0,1 l nach einer Betriebsdauer von etwa 90 Stunden etwa 200 mbar.

2. Ausführungsbeispiel

Für ein Gasgemisch aus Helium und Tritium mit einem Helium-Partialdruck von 3 mbar und einem Tritium-Partialdruck von $10^{-3}$ mbar – einer Gaszusammensetzung, die der im Primärkühlkreislauf eines gasgekühlten Hochtemperaturreaktors nach Entspannung entspricht – beträgt unter Verwendung eines Wolframfadens mit einer Fläche von 20 cm² und einer Temperatur von 2000 K bei einer elektrischen Leistung von 1,3 kW sowie einer permeablen Wandung aus α-Eisen mit einer Dicke von 1 mm der Durchsatz 0,1 g Tritium pro Tag, der maximal erreichbare Druck 1,6 bar.

**Patentansprüche**

1. Verfahren zur selektiven Abtrennung von Wasserstoff aus einer Gasmischung durch Diffusion, aus einer allseitig verschliessbaren Kammer, durch eine für atomaren Wasserstoff durchlässige, für molekularen Wasserstoff weniger durchlässige Wand aus einem von Palladium verschiedenen Material, in eine zweite allseitig verschliessbare Kammer, dadurch gekennzeichnet, dass man den in molekularer oder gebundener Form vorliegenden Wasserstoff vor der Diffusion mittels einer von der Wand gesonderten Vorrichtung in atomaren Wasserstoff umwandelt.

2. Verfahren nach Anspruch 1, dadurch gekennzeichnet, dass die Massnahmen zum Abtrennen des Wasserstoffs so lange durchgeführt werden, bis der Druck in dem abgetrennten Wasserstoff eine vorbestimmte, oberhalb des Partialdruckes des Wasserstoffs in dem Gas, von dem er abgetrennt wird, liegende Höhe erreicht hat.

3. Vorrichtung zur Durchführung des Verfahrens nach Anspruch 1 oder 2 mit zwei Kammern, die durch eine für atomaren Wasserstoff permeable, für molekularen Wasserstoff in geringerem Masse permeable Wandung aus einem von Palladium verschiedenen Material voneinander getrennt werden und von denen die eine mit einer Zuleitung für die wasserstoffhaltige Gasmischung versehen ist, während die andere zum Auffangen und zur Entnahme des abgetrennten Wasserstoffs dient, dadurch gekennzeichnet, dass in der mit der Zuleitung (1) versehenen Kammer (2) eine von der semipermeablen Trennwand (3) gesonderte Einrichtung (4) zur Umwandlung des molekularen und/oder gebundenen Wasserstoffs in atomaren Wasserstoff vorgesehen ist.

4. Vorrichtung nach Anspruch 3, dadurch gekennzeichnet, dass die mit der Zuleitung (1) versehene Kammer (2) über ein Ventil mit einer Ableitung (7) für das nach Abtrennen des Wasserstoffs verbleibende Restgas verbunden ist.

5. Vorrichtung nach Anspruch 3 oder 4, dadurch gekennzeichnet, dass die zur Umwandlung von molekularem und/oder gebundenem Wasserstoff in atomaren Wasserstoff vorgesehene Einrichtung (4) eine Kontaktdissoziationen, Glimmentladungen, Hochfrequenzentladungen oder ionisierende Strahlung hervorrufende oder eine Lichtbögen erzeugende Einrichtung ist.

6. Vorrichtung nach einem der Ansprüche 3 bis 5, dadurch gekennzeichnet, dass als zur Umwandlung in atomaren Wasserstoff vorgesehene Einrichtung (4) ein auf eine oberhalb 1500 K liegende Temperatur aufheizbarer Faden, Draht oder Körper sonstiger Form aus hochschmelzendem Material wie Wolfram, Iridium, Osmium, Rhenium vorgesehen ist.

7. Vorrichtung nach Anspruch 3, dadurch gekennzeichnet, dass die semipermeable Wandung (3) auf eine oberhalb Zimmertemperatur liegende Temperatur aufheizbar ist.

8. Vorrichtung nach Anspruch 7, dadurch gekennzeichnet, dass die semipermeable Wandung (3) auf eine Temperatur von 400 bis etwa 800 K aufheizbar ist.

9. Vorrichtung nach einem der Ansprüche 3 bis 8, dadurch gekennzeichnet, dass die semipermeable Wandung (3) aus Eisen, Stahl oder Nickel sowie Nickelbasislegierungen besteht.

10. Vorrichtung nach einem der Ansprüche 3 bis 9, dadurch gekennzeichnet, dass die Kammern (2, 5) koaxial zueinander angeordnet sind, wobei der schwer schmelzbare Faden, Draht oder sonstige Glühkörper (4) in der gemeinsamen Achse der Kammern vorgesehen und die semipermeable Wandung (3) als den Glühkörper mit Abstand umgebender Hohlzylinder ausgebildet ist.

## Claims

1. Process for the selective separation of hydrogen from a gas mixture by diffusion from a chamber which can be sealed on all sides, through a wall which is permeable to atomic hydrogen and is less permeable to molecular hydrogen and which consists of a material other than palladium, into a second chamber which can be sealed on all sides, characterised in that the hydrogen present in a molecular or bonded form is converted, before the diffusion, into atomic hydrogen by means of equipment separate from the wall.

2. Process according to Claim 1, characterised in that the measures for separating the hydrogen are continued until the pressure in the separated hydrogen has reached a predetermined level which is above the partial pressure of the hydrogen in the gas from which it is being separated.

3. Equipment for carrying out the process according to Claim 1 or 2, having two chambers which are separated from one another by a wall which is permeable to atomic hydrogen and is permeable to molecular hydrogen to a lesser extent and which consists of a material other than palladium, one of the chambers being provided with a feed line for the hydrogen-containing gas mixture, whilst the other chamber is used for collecting and removing the hydrogen which has been separated off, characterised in that a device (4), separate from the semi-permeable partition wall (3), for converting the molecular and/or bonded hydrogen into atomic hydrogen is provided in the chamber (2) provided with the feed line (1).

4. Equipment according to Claim 3, characterised in that the chamber (2) provided with the feed line (1) is connected via a valve to an outlet line (7) for the residual gas remaining after the hydrogen has been separated off.

5. Equipment according to Claim 3 or 4, characterised in that the device (4) provided for the conversion of molecular and/or bonded hydrogen into atomic hydrogen is a device which induces disociations by contact glow discharges, high-frequency discharges or ionising radiation, or is a device which generates arcs.

6. Equipment according to one of Claims 3 to 5, characterised in that a filament, wire or body of another shape, which can be heated to a temperature above 1500 K and consist fo a high-melting material, such as tungsten, iridium, osmium or rhenium, is provided as the device (4) provides for the conversion into atomic hydrogen.

7. Equipment according to Claim 3, characterised in that the semipermeable wall (3) can be heated to a temperature above room temperature.

8. Equipment according to Claim 7, characterised in that the semipermeable wall (3) can be heated to a temperature of 400 to about 800 K.

9. Equipment according to one of Claims 3 to 8, characterised in that the semipermeable wall (3) consists of iron, steel, nickel or nickel-based alloys.

10. Equipment according to one of Claims 3 to 9, characterised in that the chambers (2, 5) are arranged coaxially to one another, the refractory filament, wire or other incandescent body (4) being provided in the common axis of the chambers, and the semipermeable wall (3) being formed as a hollow cylinder which surrounds the incandescent body at a distance.

## Revendications

1. Procédé pour séparer sélectivement l'hydrogène d'un mélange gazeux, par diffusion d'une première chambre pouvant être fermée de tout côté à une seconde chambre pouvant être fermée de tout côté à travers une paroi, en une matière différente du palladium, perméable à l'hydrogène atomique et moins perméable à l'hydrogène moléculaire, caractérisé en ce qu'il consiste à transformer, avant la diffusion, l'hydrogène se trouvant sous forme moléculaire ou sous forme combinée en hydrogène atomique à l'aide d'un dispositif distinct de la paroi.

2. Procédé selon la revendication 1, caractérisé en ce qu'il consiste à prendre les mesures pour séparer l'hydrogène jusqu'à ce que la pression de l'hydrogène séparé atteigne une valeur élevée prescrite, supérieure à la pression partielle de l'hydrogène dans le gaz dont il est séparé.

3. Installation pour exécuter le procédé selon la revendication 1 ou 2, comprenant deux chambres, qui sont séparées l'une de l'autre par une paroi en une matière différente du palladium, perméable à l'hydrogène atomique mais moins perméable à l'hydrogène moléculaire et dont l'une est munie d'un conduit d'amenée d'un mélange gazeux contenant de l'hydrogène, tandis que l'autre sert à recueillir et à soutirer l'hydrogène séparé, caractérisé en ce que dans la chambre (2) munie du conduit (1) d'amenée est prévu un dispositif (4), distinct de la paroi (3) de séparation semiperméable, destiné à transformer l'hydrogène moléculaire et/ou combiné en hydrogène atomique.

4. Installation selon la revendication 3, caractérisée en ce que la chambre (2) munie d'un conduit (1) d'amenée communique par l'intermédiaire d'une vanne avec un conduit (7) d'évacuation pour le gaz restant après la séparation de l'hydrogène.

5. Installation selon la revendication 3 ou 4, caractérisée en ce que le dispositif (4) prévu pour transformer l'hydrogène moléculaire et/ou l'hydrogène combiné en hydrogène atomique est un dispositif provoquant des dissociations par contact, des décharges luminescentes, des décharges à haute fréquence ou un rayonnement ionisant ou créant un arc électrique.

6. Installation selon l'une des revendications 3 à 5, caractérisée en ce que, comme dispositif (4) pour la transformation en hydrogène atomique, est prévu un filament, fil ou corps d'autre forme pouvant être chauffé à une température supérieure à 1500° K, en und matière à point de fusion élevé, comme le tungstène, l'iridium, l'osmium, le rhénium.

7. Installation suivant la revendication 3, caractérisée en ce que la paroi (3) semi-perméable peut être chauffée à une température supérieure à la température ambiante.

8. Installation suivant la revendication 7, caractérisée en ce que la paroi (3) semi-perméable peut être chauffée à une température de 400 à 800° K environ.

9. Installation suivant l'une des revendications 3 à 8, caractérisée en ce que la paroi semi-perméable est en fer, en acier ou en nickel ainsi qu'en alliages à base de nickel.

10. Installation suivant l'une des revendications 3 à 9, caractérisée en ce que les chambres (2, 5) sont disposées coaxialement, le filament, le fil ou autre corps (4) incandescent difficilement fusible se trouvant dans l'axe commun des chambres et la paroi (3) semi-perméable formant un cylindre creux entourant à distance le corps incandescent.